# EUROPÄISCHE PATENTSCHRIFT

(11) **EP 2 192 970 B1**
(45) Veröffentlichungstag und Bekanntmachung des Hinweises auf die Patenterteilung: **10.07.2013**
(21) Anmeldenummer: 08801962.5
(22) Anmeldetag: 10.09.2008
(51) Int. Cl.: B01D 53/26, B60T 17/00, F15B 21/04

(54) **TROCKENMITTELPATRONE FÜR EINE DRUCKLUFTAUFBEREITUNGSANLAGE UND VERFAHREN ZUR HERSTELLUNG EINER TROCKENMITTELPATRONE**
DRYING AGENT CARTRIDGE FOR A COMPRESSED AIR TREATMENT SYSTEM AND METHOD FOR PRODUCING A DRYING AGENT CARTRIDGE
CARTOUCHE D'AGENT SICCATIF POUR INSTALLATION DE PREPARATION D'AIR COMPRIME ET PROCEDE DE FABRICATION D'UNE CARTOUCHE D'AGENT SICCATIF

(30) Priorität: 27.09.2007 DE 102007046167
(43) Veröffentlichungstag der Anmeldung: 09.06.2010
(73) Patentinhaber: KNORR-BREMSE Systeme für Nutzfahrzeuge GmbH, 80809 München (DE)
(72) Erfinder: RIEDI, Angelika, 80637 München (DE); SCHÄBEL, Stefan, 80809 München (DE); LEHMANN, Jens, 88326 Aulendorf (DE); HILBERER, Eduard, 68766 Hockenheim (DE)
(74) Vertreter: Mattusch, Gundula
(86) Internationale Anmeldenummer: PCT/EP2008/007390
(87) Internationale Veröffentlichungsnummer: WO 2009/043427

(56) Entgegenhaltungen:
- EP-A- 1 495 934
- EP-A- 1 669 125
- WO-A-2004/103509
- DE-B3-102006 019 865

## Beschreibung

Die Erfindung betrifft Trockenmittelpatronen gemäß den Oberbegriffen der unabhängigen Ansprüche 1 und 2.

Die Erfindung betrifft weiterhin Verfahren zur Herstellung einer Trockenmittelpatrone gemäß den Oberbegriffen der unabhängigen Ansprüche 13 und 14.

Druckluftaufbereitungsanlagen, die einen Lufttrockner mit einer Trockenmittelpatrone umfassen, werden üblicherweise in Fahrzeugen, zum Beispiel auf der Schiene oder Straße verkehrenden Nutzfahrzeugen, eingesetzt, da diese Teilsysteme, wie druckluftbetriebene Bremsen oder eine Luftfederung, aufweisen, die mit Druckluft versorgt werden müssen. Die von einem Kompressor bereitgestellte Druckluft wird in dem Lufttrockner der Druckluftaufbereitungsanlage von Öl, Schmutz und Feuchtigkeit befreit. Anschließend wird die so aufbereitete Druckluft in geeigneter Weise auf verschiedene vorhandene Verbraucher verteilt. Die Aufbereitung der Druckluft ist notwendig, da die der Druckluftaufbereitungsanlage nachgeordneten Verbraucher ansonsten korrodieren und verschmutzen oder durch die Feuchtigkeit Einfrieren können und schließlich eine deutlich reduzierte Lebensdauer aufweisen würden.

Die Reinigungsfunktion wird üblicherweise von einer austauschbaren Trockenmittelpatrone, beispielsweise einer Trockenmittelpatrone mit OSC-Funktionalität ("Oil Separator Cartrige"), wahrgenommen, welche Vorrichtungen zum Abscheiden von Öl und Schmutz, üblicherweise ein Koaleszenzfilter, sowie dem Trocknen der Luft umfasst. Damit wird gleichzeitig eine Verunreinigung des verwendeten Trockenmittels durch Öl vermieden, wodurch die Trocknungsleistung beeinträchtigt würde. Ein Rückschlagventil verhindert, dass beim Befüllen die Druckluft das Kombinationsfilter umgehen kann und beim Regenerieren das Kombinationsfilter zu sehr geschädigt wird. Obwohl moderne Druckluftaufbereitungsanlagen eine Möglichkeit zur zumindest teilweisen Regeneration oder Spülung der Trockenmittelpatrone durch Umkehrung der Luftströmung in einem Regenerationszyklus aufweisen, ist die Trockenmittelpatrone ein Verschleißteil, welches regelmäßig ausgetauscht werden muss.

Zur Schonung der Umwelt, zur Vermeidung von Abfall, und zur Reduzierung der Betriebskosten der Druckluftaufbereitungsanlage ist es daher erstrebenswert, die Konstruktion der Trockenmittelpatrone möglichst einfach zu halten und die Lebensdauer zu verlängern.

Die DE 10 2006 019 865 B3 beschreibt eine Trockenmittelpatrone für eine Druckluftaufbereitungsanlage eines Fahrzeugs, wobei die Trockenmittelpatrone ein Koaleszenzfilter als Kombinationsfilter umfasst, welches umlaufend um eine das Trockenmittel aufnehmende Trockenmittelbox angeordnet ist.

Aus der EP 1 495 934 A2 ist weiterhin eine Trockenmittelpatrone für einen Lufttrockner bekannt, wobei die Trockenmittelpatrone ein Koaleszenzfilter umfasst, das umlaufend um eine Trockenmittelbox oder zwischen der Trockenmittelbox und einer Bodenplatte angeordnet ist.

Eine Trockenmittelpatrone für einen Lufttrockner ist ebenfalls aus der WO 2004/103509 A2 bekannt, wobei die Trockenmittelpatrone ein Koaleszenzfilter umfasst, das umlaufend um eine Trockenmittelbox angeordnet ist und dabei an seinen Enden von einem die Enden umfassenden Träger abgeschlossen wird.

Die EP 1 669 125 A1 zeigt eine Trockenmittelpatrone für einen Lufttrockner, wobei die Trockenmittelpatrone ein umlaufend um eine Trockenmittelbox angeordnetes Koaleszenzflter umfasst, welches in einer axialen Richtung der Trockenmittelpatrone in radialer Richtung von einer Fixierung festgelegt ist, welche die Enden des Filters umfasst.

Der Erfindung liegt die Aufgabe zugrunde, eine Trockenmittelpatrone bereitzustellen, die einfacher baut und eine längere Lebensdauer besitzt, wodurch der während des Betriebes der Druckluftaufbereitungsanlage anfallende Abfall sowie die Betriebskosten reduziert werden können.

Diese Aufgabe wird mit den Merkmalen der unabhängigen Ansprüche gelöst.

Vorteilhafte Ausführungsformen der Erfindung sind in den abhängigen Ansprüchen gegeben.

Die Erfindung baut auf der gattungsgemäßen Trockenmittelpatrone gemäß Anspruch 1 dadurch auf, dass an dem Trägerelement in radialer Richtung weisende, das Trägerelement umlaufende Luftleitelemente vorgesehen sind, die die Luft in einer Förderphase in das Innere des Kombinationsfilters leiten, und dass die Luftleitelemente in radialer Richtung in das in radialer Richtung durchströmte Kombinationsfilter hineinragen. Das Halteelement kann beispielsweise als eine elastische Manschette ausgebildet sein, die das Kombinationsfilter sicher an dem Trägerelement fixiert, wobei gleichzeitig das Atmen des Kombinationsfiltermaterials ermöglicht wird, wenn sich in diesem Öl und Schmutz während der Förderphasen ablagert. Das zumindest eine Luftleitelement ermöglicht auf eine Abdichtung zum Trägerelement an den Rändern des Kombinationsfilters zu verzichten, da der Luftstrom in das Kombinationsfiltermaterial geleitet wird und nicht am Rand des Kombinationsfilters vorbeiströmen kann.
Das Kombinationsfilter liegt zumindest abschnittsweise direkt an einem Trägerelement an. Direkt bedeutet einen mechanischen Kontakt der im Wesentlichen ohne weiteres dazwischenliegendes Material, insbesondere ohne Klebstoffe, zwischen dem Kombinationsfilter und dem Trägerelement erfolgt. Durch ein vollständiges direktes Anliegen des Kombinationsfilters an dem Trägerelement kann die Anzahl der Fertigungsschritte beziehungsweise die Fertigungszeit verringert werden, da ein Klebeschritt beziehungsweise eine zugehörige Trocknungszeit für den Klebstoff entfallen kann. Weiterhin wird ein Recycling der Trockenmittelpatrone erleichtert, da keine Klebeverbindung zwischen den Einzelteilen getrennt werden muss. Ist das Anliegen zumindest abschnittsweise direkt, so ist zumindest noch die Menge des benötigten Klebstoffes beziehungsweise des zwischen Filtermaterial und Trägerelement liegenden Materials reduziert.

Alternativ baut die Erfindung auf der gattungsgemäßen Trockenmittelpatrone gemäß Anspruch 2 dadurch auf, dass an dem Trägerelement und der Haltevorrichtung in axialer Richtung weisende das Trägerelement umlaufende Störkonturen vorgesehen sind, welche Luft in das Innere des Kombinationsfilters leiten, und dass die Störkonturen in axialer Richtung in das in axialer Richtung durchströmte Kombinationsfilter hineinragen. Durch das Anbringen der zumindest einen als Luftleitelement wirkenden Störkontur kann ebenfalls auf eine zusätzliche Abdichtung zum Trägerelement am Rand des Kombinationsfilters verzichtet werden. Die axiale Fixierung des Kombinationsfilters gewährleistet die sichere Verpressung des Filtermaterials an dem Trägerelement in axialer Richtung.

Bevorzugterweise ist vorgesehen, dass ein Teil der Trockenmittelbox als Trägerelement ausgebildet ist. Das zumindest teilweise direkte Anliegen des Kombinationsfilters an der Trockenmittelbox erlaubt die Einsparung von Halte- und Dichtelementen, die üblicherweise das verwendete Filtermaterial des Kombinationsfilters zu einer formstabilen Baugruppe formen. Somit entfällt das bisher übliche separate'Filterelement, welches in der Trockenmittelpatrone eingebaut wurde. Weiterhin wird eine maximale Anströmfläche des Kombinationsfilters ermöglicht, da kein Bereich des Kombinationsfilters von Halte- und Dichtelementen verdeckt wird. Die maximierte Anströmfläche wirkt sich positiv auf die Lebensdauer der Trockenmittelpatrone aus, da eine größere Menge an festen Partikeln und Emulsion gebunden werden kann, ohne den Staudruck wesentlich zu erhöhen. Mit der direkten mechanischen Befestigung des Filtermaterials an einer Haltevorrichtung ist es auch möglich, die Trockenmittelpatrone ohne zusätzlichen Klebstoff zur Fixierung des Filtermaterials, wie ansonsten bei Filterelementen üblich, anzufertigen.

Alternativ kann vorgesehen sein, dass das Trägerelement separat von der Trockenmittelbox in der Trockenmittelpatrone angeordnet ist. Es ist also ein von der Trockenmittelbox unabhängiges separates Trägerelement in der Trockenmittelpatrone angeordnet. Auch zusammen mit einem separaten Trägerelement können die beschriebenen Fertigungs- und Recyclingvorteile gegenüber einer Klebeverbindung genutzt werden.

Dabei kann vorgesehen sein, dass der Dichtring auf dem separaten Trägerelement abdichtet. Auf diese Weise kann der Durchmesser des Dichtringes verringert werden, was die Wahrscheinlichkeit für Material- und Montagefehler reduziert.

Vorteilhafterweise kann vorgesehen sein, dass das Kombinationsfilter in azimutaler Richtung auf das Trägerelement gewickelt ist, wobei die Schichtung der zumindest einen Filterlagen in radialer Richtung erfolgt. Die schichtweise Wicklung des Kombinationsfilters in azimutaler Richtung ist eine einfache Möglichkeit, um das Kombinationsfilter in definierter Weise an dem Trägerelement zu befestigen.

Nützlicherweise ist dabei vorgesehen, dass das Kombinationsfilter aus zumindest einer das Trägerelement umlaufenden kreisscheibenförmigen Filterlage besteht, wobei die Schichtung der zumindest einen Filterlage in axialer Richtung erfolgt. Die einzelnen Filterlagen können so einfach an dem Trägerelement in der Trockenmittelpatrone oder vor dem Einbau in die Trockenmittelpatrone zu dem Kombinationsfilter zusammengefügt werden, indem die zumindest eine Filterlage auf das Trägerelement geschichtet wird.

Es ist auch möglich, dass das Kombinationsfilter als reines Koaleszenzfilter ausgebildet ist. Ein reines Koaleszenzfilter besitzt nur eine geringe Speicherfähigkeit. Ein Verschleiß durch Sättigung des Filtermaterials kann auf diese Weise zumindest reduziert werden.

Es ist weiterhin möglich, dass das Kombinationsfilter ein Sinterfilter ist. Ein Sinterfilter kann in einfacher Weise in der zur Befestigung an dem Trägerelement benötigten Form hergestellt werden.

Nützlicherweise kann vorgesehen sein, dass eine Gummilippe eines das Trägerelement umlaufenden Dichtrings als Rückschlagventil ausgeführt ist. Das für eine Regeneration notwendige Rückschlagventil ist also als ein das Trägerelement umlaufender Dichtring mit Gummilippe ausgeführt. Auf diese Weise kann die Aufspaltung des Luftstromes in der Regenerationsphase in baulich einfacher Weise realisiert werden, wobei der durch das Rückschlagventil strömende Luftstrom das Kombinationsfilter temporär umgehen kann.

Alternativ kann vorgesehen sein, dass das Rückschlagventil in Form zumindest dreier separater Einzelventile ausgeführt ist, die zumindest annähernd gleichmäßig über den Umfang des Trägerelements verteilt sind. Die verwendeten Rückschlagventile sind in häufigem Kontakt mit Öl- und Schmutzpartikeln, weshalb separate Einzelventile, insbesondere solche, die aus Metall gefertigt sind, einen geringen Verschleiß aufweisen.

Die Erfindung baut auf dem gattungsgemäßen Verfahren zur Herstellung einer Trockenmittelpatrone gemäß Anspruch 12 dadurch auf, dass an dem Trägerelement in radialer Richtung weisende, das Trägerelement umlaufende Luftleitelemente angeordnet werden, die die Luft in einer Förderphase in das Innere des Kombinationsfilters leiten und die in radialer Richtung in das in radialer Richtung durchströmte Kombinationsfilter hineinragen.

Alternativ baut die Erfindung auf dem gattungsgemäßen Verfahren gemäß Anspruch 14 dadurch auf, dass an dem Trägerelement und der Haltevorrichtung in axialer Richtung weisende das Trägerelement umlaufende Störkonturen angeordnet werden, welche Luft in das Innere des Kombinationsfilters leiten und die in axialer Richtung in das in axialer Richtung durchströmte Kombinationsfilter hineinragen.

Auf diese Weise werden die Vorteile der erfindungsgemäßen Trockenmittelpatronen auch im Rahmen von Verfahren umgesetzt.

Dieses wird in nützlicher Weise dadurch weiterentwickelt, dass das Kombinationsfilter in azimutaler Richtung auf das Trägerelement gewickelt wird.

Alternativ kann vorgesehen sein, dass das Kombinationsfilter aus zumindest einer kreisscheibenförmigen Filterlage aufgebaut wird, die das Trägerelement umläuft.

Die Erfindung wird nun mit Bezug auf die begleitenden Zeichnungen anhand besonders bevorzugter Ausführungsformen beispielhaft erläutert.

Es zeigen:
- Figur 1: eine schematisch vereinfachte Darstellung eines Fahrzeugs mit einer Druckluftaufbereitungsanlage;
- Figur 2: eine erste Ausführungsform einer erfindungsgemäßen Trockenmittelpatrone;
- Figur 3: Luftströmungswege in der ersten Ausführungsform einer erfindungsgemäßen Trockenmittelpatrone;
- Figur 4: einen Ausschnitt einer zweiten Ausführungsform einer erfindungsgemäßen Trockenmittelpatrone mit Luftströmungswegen;
- Figur 5: einen Ausschnitt einer dritten Ausführungsform einer erfindungsgemäßen Trockenmittelpatrone mit Luftströmungswegen;
- Figur 6: eine alternative Ausgestaltung eines Rückschlagventils;
- Figur 7: eine vierte Ausführungsform eines Kombinationsfitters mit einem separaten Trägerelement, welches senkrecht in der Trockenmittelpatrone platziert und in einer Förderphase von innen nach außen durchströmt wird;
- Figur8: eine fünfte Ausführungsform eines Kombinationsfilters mit einem separaten Trägerelement, welches senkrecht in der Trockenmittelpatrone platziert und in einer Förderphase von außen nach innen durchströmt wird und
- Figur 9: einige Prozessschritte zur Herstellung einer erfindungsgemäßen Trockenmittelpatrone mit einem gewickelten Kombinationsfilter.

In den nachfolgenden Zeichnungen bezeichnen gleiche Bezugszeichen gleiche oder gleichartige Teile.

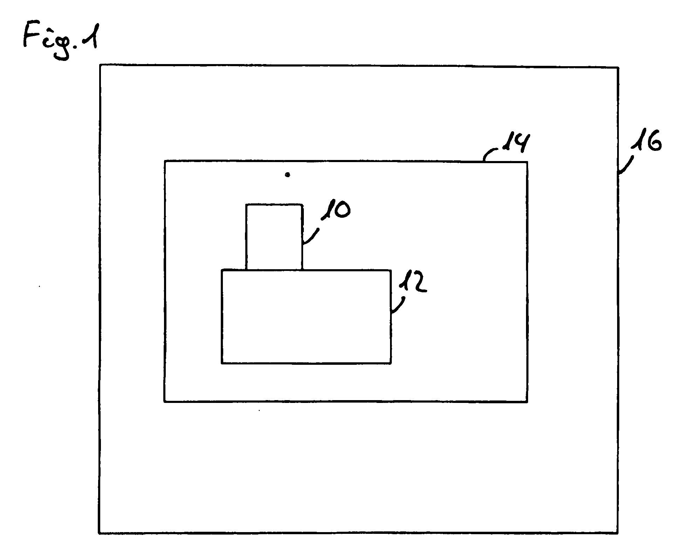

Figur 1 zeigt eine schematisch vereinfachte Darstellung eines Fahrzeugs mit einer Druckluftaufbereitungsanlage. Das Fahrzeug 16 ist mit einer Druckluftaufbereitungsanlage 14 ausgerüstet, die einen Lufttrockner 12 mit einer daran angeordneten Trockenmittelpatrone 10 umfasst.

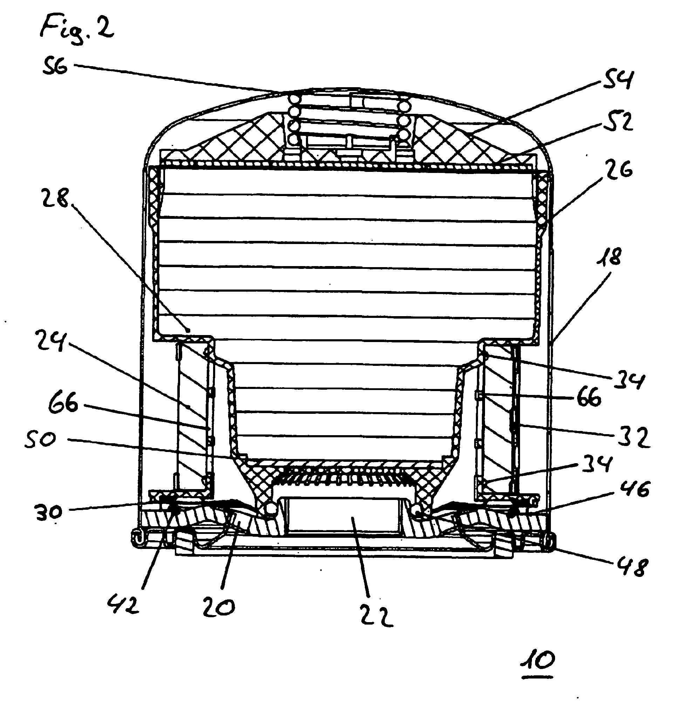

Figur 2 zeigt eine erste Ausführungsform einer erfindungsgemäßen Trockenmittelpatrone. Die dargestellte Trockenmittelpatrone 10 besteht im Wesentlichen aus einer mit einem Trockenmittel 28 gefüllten Trockenmittelbox 26, die in einem Gehäuse 18 angeordnet ist. Das Gehäuse 18 wird im unteren Bereich von einer Bodenplatte 46 mit einem Lufteinlass 20 und einem Luftauslass 22 verschlossen. Zwischen der Bodenplatte 46 und der Trockenmittelbox 26 dichten ein O-Ring 48 und einem Dichtring 30 mit einer Gummilippe 42, wobei die Gummilippe 42 als ein Rückschlagventil arbeitet. Das Rückschlagventil in Form der Gummilippe 42 ist mechanisch oder chemisch mit der Trockenmittelbox 26 verbunden und weist eine definierte Öffnungs- und Schließcharakteristik auf. Insbesondere Öffnet das Rückschlagventil bei einem Überdruck in der Trockenmittelpatrone 10 und wirkt somit als Sicherheitsventil. Die Trockenmittelbox 26 ist in axialer Richtung von einem unteren luftdurchlässigen Rückhalteelement 50 und einem oberen luftdurchlässigen Rückhalteelement 52 begrenzt, die das Trockenmittel 28 im Inneren der Trockenmittelbox 26 zurückhalten. Im oberen Bereich der Trockenmittelbox 26 ist weiterhin eine Druckfeder 56 und ein luftdurchlässiger Deckel 54 vorgesehen, über die das Trockenmittel 28 im Inneren der Trockenmittelbox 26 komprimiert wird. Ein Kombinationsfilter 24 umschließt in axialer Richtung die Trockenmittelbox 26 und wird radial von einem Halteelement 32 an der Trockenmittelbox 26 fixiert. Das Kombinationsfilter 24 unterteilt die Trockenmittelpatrone 10 in einen Vorfilterbereich und einen Nachfilterbereich. Aufgabe des Kombinationsfilters 24 während einer Förderphase ist es, Öl- und Schmutzpartikel sowie Emulsionströpfchen an einer Anströmfläche festzuhalten, flüssiges Öl zu speichern und feinste Öltröpfchen und Aerosole durch einen Koaleszenzeffekt in flüssiges Öl umzuwandeln und daraufhin abzuscheiden. Die Auslegung von Ausströmfläche und Filteraufbau bewirkt dabei ein definiertes Verhältnis von Luftausströmgeschwindigkeit und Öltröpfchengröße. Dieses Verhältnis garantiert, dass keine Öltröpfchen über den Nachfilterbereich in die Trockenmittelbox 24 gelangen und so die Lebensdauer der Trockenmittelpatrone 10 und der angeschlossenen Verbraucher verkürzen. Luftleitelemente 34 ragen in radialer Richtung von der Trockenmittelbox 26 ausgehend in das Kombinationsfilter 24 hinein und vermeiden so eine Umgehung des Kombinationsfilters 24 durch einströmende Luft. Die Abdichtung während einer Förderphase zwischen Vorfilterbereich und Nachfilterbereich wird also durch eine spezielle Abdichtgeometrie bestehend aus Luftleitelementen 34 in Verbindung mit dem außen liegenden Halteelement 32 erreicht.

Der Kombinationsfilter 24 wird in azimutaler Richtung um die Trockenmittelbox 26 gewickelt. Dabei bildet das Filtermaterial des Kombinationsfilters 24 zumindest eine Filterschicht in radialer Richtung. Das Halteelement 32, das beispielsweise als elastische Gummimanschette ausgebildet sein kann, fixiert das Filtermaterial des Kombinationsfilters 24 in radialer Richtung. Gleichzeitig erlaubt das Halteelement 32 ein Atmen des Kombinationsfilters 24 während der Ablagerung von Öl- und Schmutzpartikeln innerhalb des Filtermaterials und schützt das Kombinationsfilter 24 vor Zerstörung. Das Filtermaterial des Kombinationsfilters 24 grenzt direkt an die Trockenmittelbox 26.

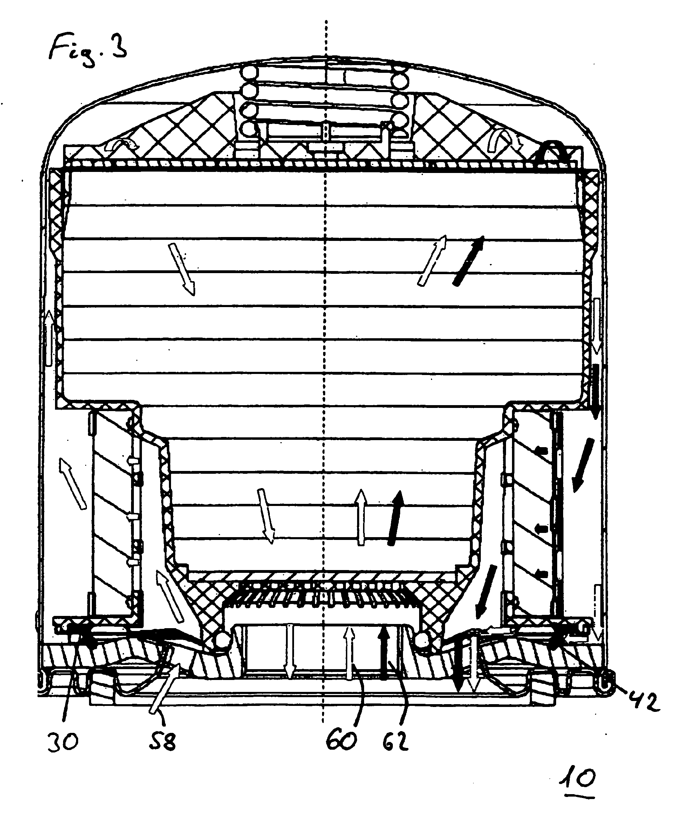

Figur 3 zeigt Luftströmungswege in der ersten Ausführungsform einer erfindungsgemäßen Trockenmittelpatrone. Die dargestellte Trockenmittelpatrone 10 ist mit der in Figur 2 dargestellten Trockenmittelpatrone identisch. Auf der linken Seite der Trockenmittelpatrone 10 ist ein Luftströmungsweg 58 während einer Förderphase eingezeichnet. Auf der rechten Seite der Trockenmittelpatrone 10 sind die beiden möglichen Luftströmungswege 60, 62 während einer Regenerationsphase eingezeichnet. Der in der Trockenmittelpatrone 10 angeordnete Dichtring 30 umfasst eine Gummilippe 42, die als Rückschlagventil wirkt und Luft unter Umgehung des Kombinationsfilters 24 aus der Trockenmittelpatrone 24 entweichen lässt.

Zunächst wird der Luftströmungsweg 58 während einer Förderphase beschrieben, die auf der linken Seite der Trockenmittelpatrone 10 eingezeichnet ist. Die Luft tritt über den Lufteinlass 20 in die Trockenmittelpatrone 10 ein. Von dort aus strömt sie in radialer Richtung durch das Kombinationsfilter 24 hindurch, wobei die Luftleitelemente 34 eine Umgehung des Kombinationsfilters 24 am Rand des Kombinationsfilters 24 verhindern. Gleichzeitig blockiert auch die Gummilippe 42 des Dichtrings 30 eine Umströmung des Kombinationsfilters 24. Während des Durchtritts durch das Kombinationsfilter 24 lagern sich in der einströmenden Luft vorhandene Öl- und Schmutzpartikel im Inneren und an der radialen Außenseite des Kombinationsfilters 24 ab. Diese Ablagerungen Vergrößern sich während des Förderbetriebs und können durch die Schwerkraft ab einer gewissen Größe in axialer Richtung an der radialen Außenseite des Kombinationsfilters 24 ablaufen und sich im Bereich der Gummilippe 42 sammeln. Die von Öl- und Schmutzpartikeln gereinigte Luft strömt anschließend zwischen der Trockenmittelbox 26 und dem Gehäuse 18 der Trockenmittelpatrone 10 in axialer Richtung aufwärts. Im Bereich des oberen luftdurchlässigen Rückhalteelements 52 erfolgt eine Umlenkung der Luft, die anschließend in die Trockenmittelbox 26 einströmt und dort durch das Trockenmittel 28 getrocknet wird. Danach verlässt die gereinigte und getrocknete Luft die Trockenmittelpatrone 10 durch den Luftauslass 22.

Während einer Regenerationsphase existieren zwei mögliche Luftströmungswege 60, 62. Der Luftströmungsweg 62 ist identisch mit dem Luftströmungsweg 58, wobei jedoch die Strömungsrichtung umgekehrt ist. Getrocknete und gereinigte Luft strömt durch den Luftauslass 22 in die Trockenmittelbox 26 ein und nimmt in dem Trockenmittel 28 gespeicherte Feuchtigkeit auf. Im Bereich des Kombinationsfilters 24 strömt die Luft durch das Kombinationsfilter 24 hindurch, wobei sie Öl- und Schmutzpartikel aus dem Filtermaterial ausbläst und durch den Lufteinlass 20 aus der Trockenmittelpatrone 10 entfernt. Der weitere Luftströmungsweg 60 ist zunächst identisch mit dem Luftströmungsweg 62. Im Nachfilterbereich trennen sich jedoch beide Strömungswege 60 und 62. Aufgrund der geänderten Druckverhältnisse kann ein Teil der Luft das Kombinationsfilter 24 über die nun geöffnete Gummilippe 42 umgehen, wobei im Bereich der Gummilippe 42 abgelagerte Öl- und Schmutzpartikel mitgerissen und aus der Trockenmittelpatrone 10 ausgespült werden. Die Abdichtung im Regenerationsvorgang zwischen Nachfilterbereich und Vorfilterbereich erfolgt ebenfalls durch die Abdichtgeometrie und die Verpressung durch das Halteelement 32. Im Gegensatz zur Förderphase öffnet die Gummilippe 42 des Dichtrings 30 anfangs bei den zuerst auftretenden höheren Druckdifferenzen und schließt danach bei Erreichen eines definierten geringeren Differenzdrucks. Nützlicherweise wird dadurch auch das Kombinationsfilter 24 vor mechanischer Überlastung während einer Regenerationsphase geschützt. Während der Öffnungsphase der Gummilippe 42 des Dichtringes 30 wird das an der Außenseite des Kombinationsfilters 24 abgeschiedene Öl-Kondensatgemisch unter Umgehung des Kombinationsfilters 24 vom Nachfilterbereich in den Vorfilterbereich gespült. Von dort entweicht es durch ein im Lufttrockner 12 befindliches Ablassventil aus dem Druckluftsystem. Bei geschlossener Gummilippe 42 des Dichtrings 30 wird der gesamte Luftstrom durch das Kombinationsfilter 24 geleitet und Verschmutzungen werden weitestgehend aus diesem entfernt.

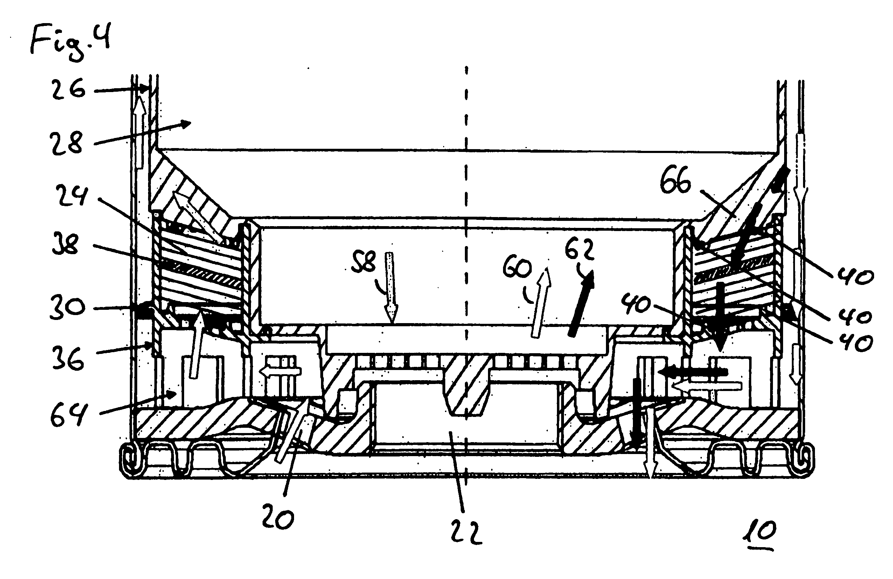

Figur 4 zeigt einen Ausschnitt einer zweiten Ausführungsform einer erfindungsgemäßen Trockenmittelpatrone mit Luftströmungswegen. Die dargestellte zweite Ausführungsform einer erfindungsgemäßen Trockenmittelpatrone 10 unterscheidet sich durch den Aufbau des Kombinationsfilters 24 von der ersten Ausführungsform. Bei dieser zweiten Ausführungsform baut sich das Kombinationsfilter 24 aus in axialer Richtung gestapelten kreisscheibenförmigen Filterlagen 38 auf, die von einer Haltevorrichtung 36 in axialer Richtung an der Trockenmittelbox 26 fixiert werden. Das Halteelement 36 wird dazu zunächst an der Trockenmittelbox 26 angeschweißt oder verclipst. Die kreisscheibenförmigen Filterlagen 38 können dann einfach an die Trockenmittelbox 26 gestapelt oder gewickelt werden. Weiterhin sind mehrere sich in axialer Richtung erstreckende Störkonturen 40 vorgesehen, die in das Kombinationsfilter 24 hineinreichen und eine Umströmung des Kombinationsfilters 24 verhindern. Ferner ist ein dem Kombinationsfilter 24 strömungstechnisch vorgelagerter Grobfilter 64 vorgesehen, der gröbere Schmutzpartikel aus dem Luftstrom ausfiltert. Die dargestellten Luftströmungen 58, 60, 62 beschreiben die zu Figur 3 analogen Luftströmungswege. Dabei ist zu beachten, dass das Kombinationsfilter 24 bei dieser Ausführungsform axial durchströmt wird. Ein Dichtring 30 mit einer Gummilippe 42 sorgt dabei für eine radiale Abdichtung außen am Gehäuse 18.

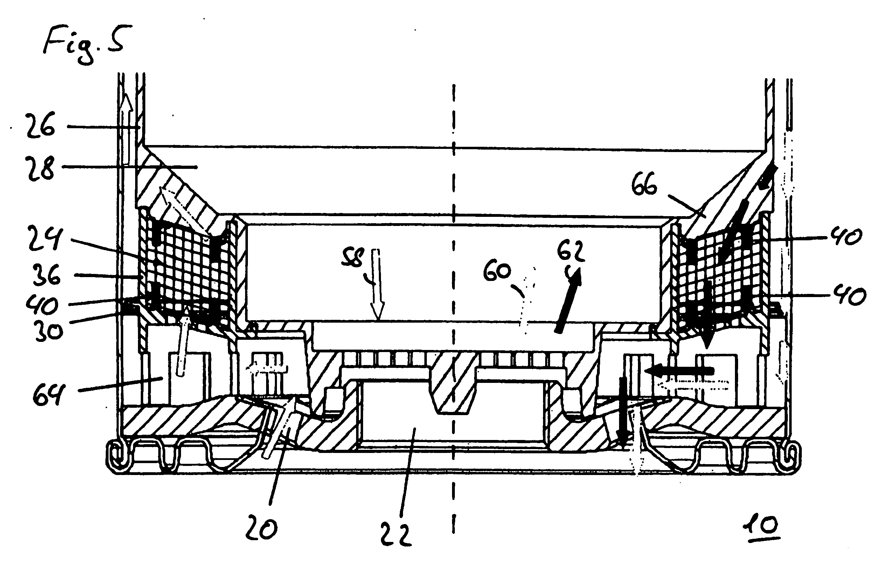

Figur 5 zeigt einen Ausschnitt einer dritten Ausführungsform einer erfindungsgemäßen Trockenmittelpatrone mit Luftströmungswegen. Die dargestellte dritte Ausführungsform einer erfindungsgemäßen Trockenmittelpatrone 10 unterscheidet sich von der zweiten Ausführungsform durch den Aufbau des Kombinationsfilters 24. Das dargestellte Kombinationsfilter 24 ist als Sinterfilter ausgeführt, das von der Haltevorrichtung 36 in axialer Richtung an der Trockenmittelbox 26 fixiert wird. Das Sinterfilter kann beispielsweise einstückig hergestellt sein, wodurch ein Aufbau aus mehreren Filterschichten überflüssig wird. Auch bei dieser Ausführungsform sind Störkonturen 40 vorgesehen, die in das Sinterfilter hineinragen und einen Bypass zur Umgehung des Sinterfilters verhindern.

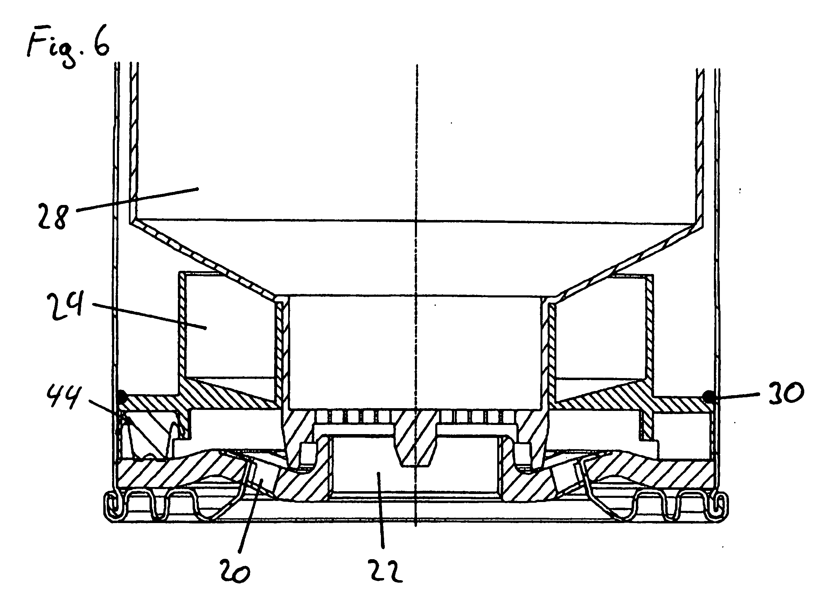

Figur 6 zeigt eine alternative Ausgestaltung eines Rückschlagsventils. Das dargestellte Rückschlagventil 44 ist als diskretes sombreroförmiges Ventil ausgeführt. Mehrere dieser einzelnen Rückschlagventile 44 können anstatt eines einzelnen umlaufenden Rückschlagventils am Rand verteilt werden. Die Einzelventile erfüllen die gleiche Funktion wie eine umlaufende Gummilippe. Zusätzlich ist ein einfacher, umlaufender Dichtring 30 notwendig, um den Vorfilterbereich gegenüber dem Nachfilterbereich abzudichten. Auch bei dieser Ausführungsform sammelt sich Öl und Schmutz im Bereich der einzelnen Sombreroventile, die in einer Regenerationsphase aufgrund der sich umkehrenden Luftströmung öffnen. Die rückströmende Luft kann dann Öl und Schmutz über die sombreroförmigen Ventile aus der Trockenmittelpatrone 10 ausspülen.

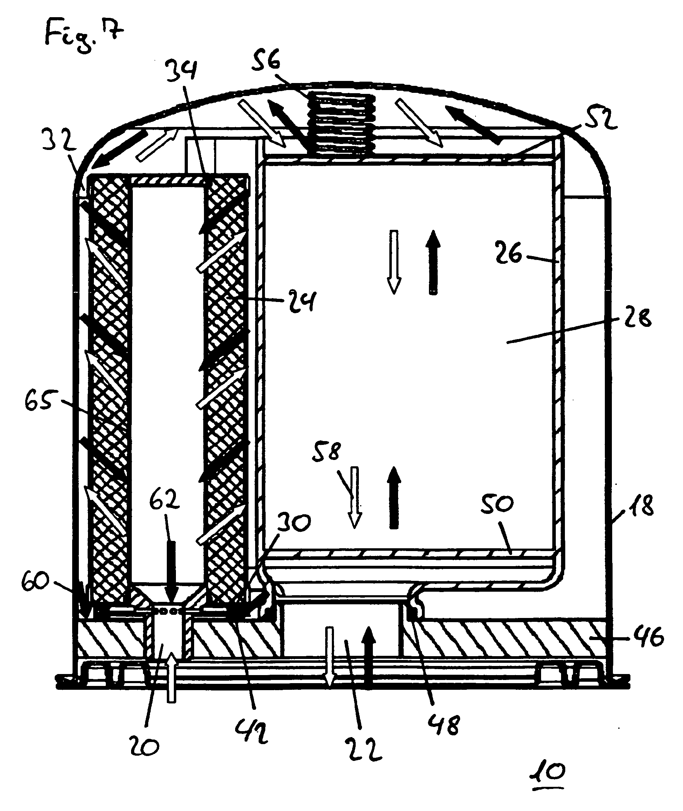

Figur 7 zeigt eine vierte Ausführungsform eines Kombinationsfilters mit einem separaten Trägerelement, welches senkrecht in der Trockenmittelpatrone platziert und in einer Förderphase von innen nach außen durchströmt wird. Das separate Trägerelement, das senkrecht in der Trockenmittelpatrone 10 platziert ist, bildet zusammen mit dem Kombinationsfilter 24 ein Filterelement. Die Trockenmittelpatrone 10 kann sowohl ein einzelnes, separates Filterelement als auch mehrere Filterelemente beinhalten. Diese Filterelemente können beliebig in der Trockenmittelbox 26 angeordnet und auch bei einem nicht konzentrisch zur Trockenmittelpatrone 10 angeordneten Lufteinlass 20 und/oder Luftauslass 22 verwendet werden. Das Kombinationsfilter 24 besteht aus mindestens einer in azimutaler Richtung auf ein separates Trägerelement 65 gewickelten Filterlage, bei der die Luft durch mindestens ein Luftleitelement 34 in das Kombinationsfilter 24 geleitet wird. Zusätzlich kann das Kombinationsfilter 24 auch mit dem separaten Trägerelement 65 verklebt werden, wobei dies jedoch erfindungsgemäß nicht notwendig ist. Ein Haltelement 32 bewirkt zusammen mit dem mindestens einen Luftleitelement 34, dass während einer Förder- oder einer Regenerationsphase keine unerwünschte Umgehung des Kombinationsfilters 24 stattfindet. In dieser Ausführungsform wird das Kombinationsfilter 24 in der Förderphase von innen nach außen durchströmt und die entstehenden Öltröpfchen können an der Außenseite des Kombinationsfilters 24 ablaufen. Die Öltröpfchen sammeln sich mit den Schmutzpartikeln im Bereich einer Gummilippe 42 eines Dichtrings 30, die die Funktion eines Rückschlagventils übernimmt, und werden in einer Regenerationsphase durch die dann geöffnete Gummilippe 42 aus der Trockenmittelpatrone 10 ausgespült. Die Gummilippe 42 schützt dabei das Kombinationsfilter 24 vor einer mechanischen Überbelastung während einer Regenerationsphase. Andere Filtermaterialien für das Kombinationsfilter 24, analog zu den vorhergehenden Ausführungsformen, sind ebenfalls möglich, wobei die Funktionsweise des Kombinationsfilters 24 zu den vorhergehenden Ausführungsformen analog ist.

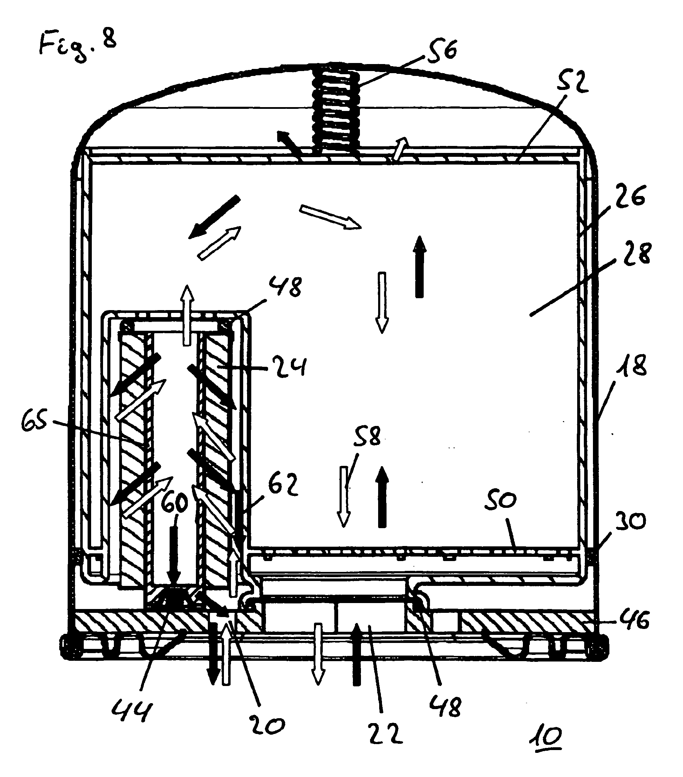

Figur 8 zeigt eine fünfte Ausführungsform eines Kombinationsfilters mit einem separaten Trägerelement, welches senkrecht in der Trockenmittelpatrone platziert und in einer Förderphase von außen nach innen durchströmt wird. Somit wird das Öl an der Innenseite des Kombinationsfilters 24 beziehungsweise des separaten Trägerelements 65 abgeschieden. Die Öltröpfchen können dann in einer Regenerationsphase durch ein integriertes Rückschlagventil 44 aus der Trockenmittelpatrone 10 gespült werden. Vor- und Nachfilterbereich müssen durch einen Dichtring 30 voneinander getrennt werden, ebenso muss das separate Trägerelement 65 mit dem Kombinationsfilter 24 gegenüber dem Trockenmittetbehätter 26 mit einem O-Ring 48 abgedichtet werden. Die Funktionsweise ist ansonsten zu den vorhergehenden Ausführungsformen analog.

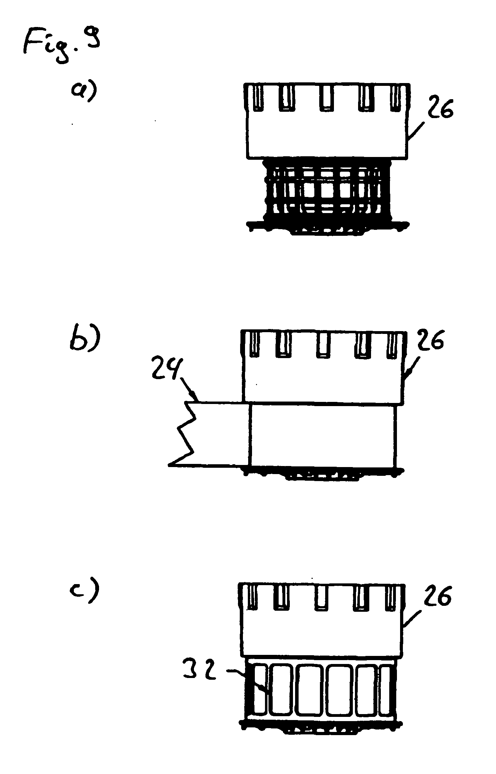

Figur 9 zeigt einige Prozessschritte zur Herstellung einer erfindungsgemäßen Trockenmittelpatrone mit einem gewickelten Kombinationsfilter. Die dargestellten Schritte beziehen sich auf die in Figur 2 beschriebene Ausführungsform, können jedoch auch auf die anderen gewickelten Ausführungsformen angewendet werden. In Figur 9 a) ist die Trockenmittelbox 26 ohne das Kombinationsfilter dargestellt. An der Trockenmittelbox 26 wird an einer Anlagefläche ein Ende des Kombinationsfilters 24, der in Streifenform vorliegt, lokal fixiert. Die Fixierung kann beispielsweise mechanisch oder durch einen dünnen Klebefilm erfolgen. Anschließend werden mithilfe einer Wickelmaschine die benötigten Filterlagen durch eine entsprechende Anzahl von Umdrehungen realisiert. Dies ist in Figur 9 b) dargestellt. Bei unmittelbarer Befestigung des Halteelements 32 nach dem Wickelprozess kann eine temporäre beziehungsweise weitere dauerhafte Fixierung des Kombinationsfilters 24 an der Trockenmittelbox entfallen. Die Fixierung durch das Halteelement ist in Figur 9 c) dargestellt. Die weiteren nicht dargestellten Prozessschritte entsprechen dem Stand der Technik und sind dem Fachmann geläufig.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

**Bezugszeichenliste**

| | |
|---|---|
| 10 | Trockenmittelpatrone |
| 12 | Lufttrockner |
| 14 | Druckluftaufbereitungsanlage |
| 16 | Fahrzeug |
| 18 | Gehäuse |
| 20 | Lufteinlass |
| 22 | Luftauslass |
| 24 | Kombinationsfilter |
| 26 | Trockenmittelbox |
| 28 | Trockenmittel |
| 30 | Dichtring |
| 32 | Halteelement |
| 34 | Luftleitelement |
| 36 | Haltevorrichtung |
| 38 | Filterlage |
| 40 | Störkontur |
| 42 | Gummilippe |
| 44 | Rückschlagventil |
| 46 | Bodenplatte |
| 48 | O-Ring |
| 50 | unteres luftdurchlässiges Rückhalteelement |
| 52 | oberes luftdurchlässiges Rückhalteelement |
| 54 | luftdurchlässiger Deckel |
| 56 | Druckfeder |
| 58 | Luftströmungsweg Förderphase |
| 60 | weiterer Luftströmungsweg Regenerationsphase |
| 62 | Luftströmungsweg Regenerationsphase |
| 64 | Grobfilter |
| 65 | separates Trägerelement |
| 66 | Trägerelement |

## Patentansprüche

1. Trockenmittelpatrone (10) für einen Lufttrockner (12) einer Druckluftaufbereitungsanlage (14) eines Fahrzeugs (16) mit
- einem Gehäuse (18) mit einem Lufteinlass (20) und einem Luftauslass (22),
- einem Kombinationsfilter (24) aus zumindest einer Filterlage zur Abscheidung von Öl- und Schmutzpartikeln,
- einer Trockenmittelbox (26) mit Trockenmittel (28) zum Trocknen der Luft und
- einem Rückschlagventil (42, 44), über das während einer Regenerationsphase zumindest ein Teil des zur Regeneration verwendeten Luftstromes an dem Kombinationsfilter (24) vorbeiströmen kann,
- wobei das Kombinationsfilter (24) zumindest abschnittsweise direkt an einem Trägerelement (65, 66) anliegt, und
- wobei ein Halteelement (32) vorgesehen ist, dass das Kombinationsfilter (24) in radialer Richtung an dem Trägerelement (65, 66) fixiert,
**dadurch gekennzeichnet,**
- **dass** an dem Trägerelement (65, 66) in radialer Richtung weisende, das Trägerelement (65, 66) umlaufende Luftleitelemente (34) vorgesehen sind, die die Luft in einer Förderphase in das Innere des Kombinationsfilters (24) leiten, und
- **dass** die Luftleitelemente (34) in radialer Richtung in das in radialer Richtung durchströmte Kombinationsfilter (24) hineinragen.

2. Trockenmittelpatrone (10) für einen Lufttrockner (12) einer Druckluftaufbereitungsanlage (14) eines Fahrzeugs (16) mit
- einem Gehäuse (18) mit einem Lufteinlass (20) und einem Luftauslass (22),
- einem Kombinationsfilter (24) aus zumindest einer Filterlage zur Abscheidung von Öl- und Schmutzpartikeln,
- einer Trockenmittelbox (26) mit Trockenmittel (28) zum Trocknen der Luft und
- einem Rückschlagventil (42, 44), über das während einer Regenerationsphase zumindest ein Teil des zur Regeneration verwendeten Luftstromes an dem Kombinationsfilter (24) vorbeiströmen kann,
- wobei das Kombinationsfilter (24) zumindest abschnittsweise direkt an einem Trägerelement (65, 66) anliegt, und
- wobei eine Haltevorrichtung (36) vorgesehen ist, dass das Kombinationsfilter (24) in axialer Richtung fixiert,
**dadurch gekennzeichnet,**
- **dass** an dem Trägerelement (65, 66) und der Haltevorrichtung (36) in axialer Richtung weisende das Trägerelement (65, 66) umlaufende Störkonturen (40) vorgesehen sind, welche Luft in das Innere des Kombinationsfilters (24) leiten, und
- **dass** die Störkonturen (40) in axialer Richtung in das in axialer Richtung durchströmte Kombinationsfilter (24) hineinragen.

3. Trockenmittelpatrone (10) nach Anspruch 1 oder 2, **dadurch gekennzeichnet, dass** ein Teil der Trockenmittelbox (26) als Trägerelement (66) ausgebildet ist.

4. Trockenmittelpatrone (10) nach Anspruch 1 oder 2, **dadurch gekennzeichnet, dass** das Trägerelement (65) separat von der Trockenmittelbox (26) in der Trockenmittelpatrone (10) angeordnet ist.

5. Trockenmittelpatrone (10) nach Anspruch 4, **dadurch gekennzeichnet, dass** der Dichtring (30) auf dem separaten Trägerelement (65) abdichtet.

6. Trockenmittelpatrone (10) nach Anspruch 1, **dadurch gekennzeichnet, dass** das Kombinationsfilter (24) in azimutaler Richtung auf das Trägerelement (65, 66) gewickelt ist, wobei die Schichtung der zumindest einen Filterlage in radialer Richtung erfolgt.

7. Trockenmittelpatrone (10) nach Anspruch 2, **dadurch gekennzeichnet, dass** das Kombinationsfilter (24) aus zumindest einer das Trägerelement (65, 66) umlaufenden kreisscheibenförmigen Filterlage (38) besteht, wobei die Schichtung der zumindest einen Filterlage (38) in axialer Richtung erfolgt.

8. Trockenmittelpatrone (10) nach Anspruch 2, **dadurch gekennzeichnet, dass** das Kombinationsfilter (24) als reines Koaleszenzfilter ausgebildet ist.

9. Trockenmittelpatrone (10) nach Anspruch 2 oder 8, **dadurch gekennzeichnet, dass** das Kombinationsfilter (24) ein Sinterfilter ist.

10. Trockenmittelpatrone (10) nach einem der vorhergehenden Ansprüche, **dadurch gekennzeichnet, dass** eine Gummilippe (42) eines das Trägerelement (65, 66) umlaufenden Dichtrings (30) als Rückschlagventil ausgeführt ist.

11. Trockenmittelpatrone (10) nach einem der Ansprüche 1 bis 9, **dadurch gekennzeichnet, dass** das Rückschlagventil (44) in Form zumindest dreier separater Einzelventile ausgeführt ist, die gleichmäßig über den Umfang des Trägerelements (65, 66) verteilt sind.

12. Verfahren zur Herstellung einer Trockenmittelpatrone (10) für einen Lufttrockner (12) einer Druckluftaufbereitungsanlage (14) eines Fahrzeugs (16) mit
- einem Gehäuse (18) mit einem Lufteinlass (20) und einem Luftauslass (22),
- einem Kombinationsfilter (24) zur Abscheidung von Öl- und Schmutzpartikeln,
- einer Trockenmittelbox (26) mit Trockenmittel (28) zum Trocknen der Luft und
- einem Rückschlagventil (42, 44), über das während einer Regenerationsphase zumindest ein Teil des zur Regeneration verwendeten Luftstromes an dem Kombinationsfilter (24) vorbeiströmen kann,
- wobei das Kombinationsfilter (24) direkt an einem Trägerelement (65, 66) befestigt wird, und
- wobei das Kombinationsfilter (24) in radialer Richtung an dem Trägerelement (65, 66) fixiert wird,
**dadurch gekennzeichnet,**
- **dass** an dem Trägerelement (65, 66) in radialer Richtung weisende, das Trägerelement (65, 66) umlaufende Luftleitelemente (34) angeordnet werden, die die Luft in einer Förderphase in das Innere des Kombinationsfilters (24) leiten und die in radialer Richtung in das in radialer Richtung durchströmte Kombinationsfilter (24) hineinragen.

13. Verfahren zur Herstellung einer Trockenmittelpatrone (10) für einen Lufttrockner (12) einer Druckluftaufbereitungsanlage (14) eines Fahrzeugs (16) mit
- einem Gehäuse (18) mit einem Lufteinlass (20) und einem Luftauslass (22),
- einem Kombinationsfilter (24) zur Abscheidung von Öl- und Schmutzpartikeln,
- einer Trockenmittelbox (26) mit Trockenmittel (28) zum Trocknen der Luft und
- einem Rückschlagventil (42, 44), über das während einer Regenerationsphase zumindest ein Teil des zur Regeneration verwendeten Luftstromes an dem Kombinationsfilter (24) vorbeiströmen kann,
- wobei das Kombinationsfilter (24) direkt an einem Trägerelement (65, 66) befestigt wird, und
- wobei das Kombinationsfilter (24) in axialer Richtung an dem Trägerelement (65, 66) fixiert wird,
**dadurch gekennzeichnet, dass** an dem Trägerelement (65, 66) und der Haltvorrichtung (36) in axialer Richtung weisende das Trägerelement (65, 66) umlaufende Störkonturen (40) angeordnet werden, welche Luft in das Innere des Kombinationsfilters (24) leiten und die in axialer Richtung in das in axialer Richtung durchströmte Kombinationsfilter (24) hineinragen.

14. Verfahren nach Anspruch 12, **dadurch gekennzeichnet,**
- **dass** das Kombinationsfilter (24) in azimutaler Richtung auf das Trägerelement (65, 66) gewickelt wird.

15. Verfahren nach Anspruch 13, **dadurch gekennzeichnet,**
- **dass** das Kombinationsfilter (24) aus zumindest einer kreisscheibenförmigen Filterlage (38) aufgebaut wird, die das Trägerelement (65, 66) umläuft.

## Claims

1. Drying agent cartridge (10) for an air dryer (12) of a compressed air treatment system (14) of a vehicle (16) with
- a housing (18) with an air inlet (20) and an air outlet (22),
- a combination filter (24) comprising at least one filter layer for separating oil and dirt particles,
- a drying agent box (26) with drying agent (28) for drying the air and
- a non-return valve (42, 44), via which during a regeneration phase at least a part of the air flow used for regeneration can flow past the combination filter (24),
- wherein the combination filter (24) lies at least in part directly against a carrier element (65, 66), and
- wherein a holding element (32) is provided which fixes the combination filter (24) in a radial direction on the carrier element (65, 66), **characterised in that**
- air guiding elements (34) surrounding the carrier element (65, 66), pointing in a radial direction, are provided on the carrier element (65, 66), said air guiding elements (34) guiding the air in a conveying phase into the interior of the combination filter (24), and
- the air guiding elements (34) project in a radial direction into the combination filter (24) with a radial flow through it.

2. Drying agent cartridge (10) for an air dryer (12) of a compressed air treatment system (14) of a vehicle (16) with
- a housing (18) with an air inlet (20) and an air outlet (22),
- a combination filter (24) comprising at least one filter layer for separating oil and dirt particles,
- a drying agent box (26) with drying agent (28) for drying the air and
- a non-return valve (42, 44), via which during a regeneration phase at least a part of the air flow used for regeneration can flow past the combination filter (24),
- wherein the combination filter (24) lies at least in part directly against a carrier element (65, 66), and
- wherein a holding device (36) is provided which fixes the combination filter (24) in an axial direction,
**characterised in that**
- interference contours (40) surrounding the carrier element (65, 66), pointing in the axial direction, are provided on the carrier element (65, 66) and the holding device (36), said interference contours (40) guiding air into the interior of the combination filter (24), and
- the interference contours (40) project in an axial direction into the combination filter (24), through which there is an axial flow.

3. Drying agent cartridge (10) according to claim 1 or 2, **characterised in that** a part of the drying agent box (26) is formed as a carrier element (66).

4. Drying agent cartridge (10) according to claim 1 or 2, **characterised in that** the carrier element (65) is arranged separately from the drying agent box (26) in the drying agent cartridge (10).

5. Drying agent cartridge (10) according to claim 4, **characterised in that** the sealing ring (30) seals on the separate carrier element (65).

6. Drying agent cartridge (10) according to claim 1, **characterised in that** the combination filter (24) is wound onto the carrier element (65, 66) in the azimuthal direction, wherein the layering of the at least one filter layer takes place in the radial direction.

7. Drying agent cartridge (10) according to claim 2, **characterised in that** the combination filter (24) consists of at least one circular-disc-form filter layer (38) surrounding the carrier element (65, 66), wherein the layering of the at least one filter layer (38) takes place in the axial direction.

8. Drying agent cartridge (10) according to claim 2, **characterised in that** the combination filter (24) is formed as a pure coalescing filter.

9. Drying agent cartridge (10) according to claim 2 or 8, **characterised in that** the combination filter (24) is a sintered filter.

10. Drying agent cartridge (10) according to one of the preceding claims, **characterised in that** a rubber lip (42) of a sealing ring (30) surrounding the carrier element (65, 66) is designed as a non-return valve.

11. Drying agent cartridge (10) according to one of the claims 1 to 9, **characterised in that** the non-return valve (44) is designed in the form of at least three separate individual valves which are distributed evenly over the periphery of the carrier element (65, 66).

12. Method for producing a drying agent cartridge (10) for an air dryer (12) of a compressed air preparation system (14) of a vehicle (16) with
- a housing (18) with an air inlet (20) and an air outlet (22),
- a combination filter (24) for separating oil and dirt particles,
- a drying agent box (26) with drying agent (28) for drying the air and
- a non-return valve (42, 44), via which during a regeneration phase at least a part of the air flow used for regeneration can flow past the combination filter (24),
- wherein the combination filter (24) is fixed directly to a carrier element (65, 66), and
- wherein the combination filter (24) is fixed in a radial direction to the carrier element (65, 66),
**characterised in that**
- air guiding elements (34) surrounding the carrier element (65, 66), pointing in the radial direction, are arranged on the carrier element (65, 66), said air guiding elements (34) guiding the air in a conveying phase into the interior of the combination filter (24) and projecting in the radial direction into the combination filter (24) through which there is a radial flow.

13. Method for producing a drying agent cartridge (10) for an air dryer (12) of a compressed air preparation system (14) of a vehicle (16) with
- a housing (18) with an air inlet (20) and an air outlet (22),
- a combination filter (24) for separating oil and dirt particles,
- a drying agent box (26) with drying agent (28) for drying the air and
- a non-return valve (42, 44), via which during a regeneration phase at least a part of the air flow used for regeneration can flow past the combination filter (24),
- wherein the combination filter (24) is fixed directly to a carrier element (65, 66), and
wherein the combination filter (24) is fixed in an axial direction to the carrier element (65, 66),
**characterised in that** interference contours (40) surrounding the carrier element (65, 66), pointing in the axial direction, are arranged on the carrier element (65, 66) and the holding device (36), said interference contours (40) guiding air into the interior of the combination filter (24) and projecting in an axial direction into the combination filter (24) through which there is an axial flow.

14. Method according to claim 12,
**characterised in that**
- the combination filter (24) is wound in an azimuthal direction onto the carrier element (65, 66).

15. Method according to claim 13,
**characterised in that**
- the combination filter (24) is constructed from at least a disc-plate-form filter layer (38) which runs around the carrier element (65, 66).

## Revendications

1. Cartouche (10) d'agent déshydratant pour un déshydrateur (12) d'air d'une installation (14) de préparation d'air comprimé d'un véhicule (16), comprenant
- un boîtier (18) ayant une entrée (20) d'air et une sortie (22) d'air,
- un filtre (24) de combinaison, composé d'au moins une couche filtrante pour la séparation de particules d'huile et de saleté,
- une boîte (26) d'agent déshydratant ayant de l'agent (28) déshydratant pour déshydrater l'air, et
- un clapet anti-retour (42, 44) par lequel, pendant une phase de régénération, au moins une partie du courant d'air utilisé pour la régénération peut passer à côté du filtre (24) de combinaison,
- dans laquelle le filtre (24) de combinaison s'applique au moins par endroit directement à un élément (65, 66) de support, et
- dans laquelle il est prévu un élément (32) de maintien de manière à immobiliser le filtre (24) de combinaison dans la direction radiale sur l'élément (65, 66) de support, **caractérisé**
- **en ce qu'**il est prévu des éléments (34) de déviation de l'air, qui sont tournés dans la direction radiale vers l'élément (65, 66) de support, qui entourent l'élément (65, 66) de support et qui conduisent l'air dans une phase de transport à l'intérieur du filtre (24) de combinaison, et
- **en ce que** les éléments (34) de déviation de l'air pénètrent dans la direction radiale dans le filtre (24) de combinaison traversé dans la direction radiale.

2. Cartouche (10) d'agent déshydratant pour un déshydrateur (12) d'air d'une installation (14) de préparation d'air comprimé d'un véhicule (16), comprenant
- un boîtier (18) ayant une entrée (20) d'air et une sortie (22) d'air,
- un filtre (24) de combinaison, composé d'au moins une couche filtrante pour la séparation de particules d'huile et de saleté,
- une boîte (26) d'agent déshydratant ayant de l'agent (28) déshydratant pour déshydrater l'air, et
- un clapet anti-retour (42, 44) par lequel, pendant une phase de régénération, au moins une partie du courant d'air utilisé pour la régénération peut passer à côté du filtre (24) de combinaison,
- dans laquelle le filtre (24) de combinaison s'applique au moins par endroit directement à un élément (65, 66) de support, et
- dans laquelle il est prévu un élément (32) de maintien de manière à immobiliser le filtre (24) de combinaison dans la direction radiale sur l'élément (65, 66) de support, **caractérisée**
- **en ce qu'**il est prévu des contours (40) de perturbation, qui sont tournés dans la direction axiale vers l'élément (65, 66) de support et vers le dispositif (36) de maintien, qui entourent l'élément (65, 66) de support et qui conduisent de l'air à l'intérieur du filtre (24) de combinaison, et
- **en ce que** les contours (40) de perturbation pénètrent dans la direction axiale dans le filtre (24) de combinaison traversé dans la direction axiale.

3. Cartouche (10) d'agent déshydratant suivant la revendication 1 ou 2, **caractérisée en ce qu'**une partie de la boîte (26) d'agent déshydratant est constituée en élément (66) de support.

4. Cartouche (10) d'agent déshydratant suivant la revendication 1 ou 2, **caractérisée en ce que** l'élément (65) de support est disposé séparément de la boîte (26) d'agent déshydratant dans la cartouche (10) d'agent déshydratant.

5. Cartouche (10) d'agent déshydratant suivant la revendication 4, **caractérisée en ce que** la bague (30) d'étanchéité s'applique de manière étanche sur l'élément (5) de support séparé.

6. Cartouche (10) d'agent déshydratant suivant la revendication 1, **caractérisée en ce que** le filtre (24) de combinaison est enroulé dans la direction azimutale sur l'élément (65, 66) de support, la stratification de la au moins une couche filtrante s'effectuant dans la direction radiale.

7. Cartouche (10) d'agent déshydratant suivant la revendication 2, **caractérisée en ce que** le filtre (24) de combinaison est constitué d'au moins une couche (38) filtrante en forme de disque circulaire, entourant l'élément (65, 66) de support, la stratification de la au moins une couche (38) filtrante s'effectuant dans la direction axiale.

8. Cartouche (10) d'agent déshydratant suivant la revendication 2, **caractérisée en ce que** le filtre (24) de combinaison est constitué en pur filtre de coalescence.

9. Cartouche (10) d'agent déshydratant suivant la revendication 2 ou 8, **caractérisée en ce que** le filtre (24) de combinaison est un filtre fritté.

10. Cartouche (10) d'agent déshydratant suivant l'une des revendications précédentes, **caractérisée en ce qu'**une lèvre (42) en caoutchouc d'une bague (30) d'étanchéité entourant l'élément (65, 66) de support est réalisée sous la forme d'un clapet anti-retour.

11. Cartouche (10) d'agent déshydratant suivant l'une des revendications 1 à 9, **caractérisée en ce que** le clapet anti-retour (24) est réalisé sous la forme d' au moins trois vannes individuelles distinctes, qui sont réparties uniformément sur le pourtour de l'élément (65, 66) de support.

12. Procédé de fabrication d'une cartouche (10) d'agent déshydratant pour un déshydrateur (12) d'air d'une installation (14) de préparation d'air comprimé d'un véhicule (16), comprenant
- un boîtier (18) ayant une entrée (20) d'air et une sortie (22) d'air,
- un filtre (24) de combinaison, composé d'au moins une couche filtrante pour la séparation de particules d'huile et de saleté,
- une boîte (26) d'agent déshydratant ayant de l'agent (28) déshydratant pour déshydrater l'air, et
- un clapet anti-retour (42, 44) par lequel, pendant une phase de régénération, au moins une partie du courant d'air utilisé pour la régénération peut passer à côté du filtre (24) de combinaison,
- dans lequel le filtre (24) de combinaison est fixé directement sur un élément (65, 66) de support, et
- dans lequel le filtre (24) de combinaison est immobilisé dans la direction radiale sur l'élément (65, 66) de support,
**caractérisé**
- **en ce que** des éléments (34) de déviation de l'air sont montés en étant tournés dans la direction radiale vers l'élément (65, 66) de support, en entourant l'élément (65, 66) de support, en conduisant l'air dans une phase de transport à l'intérieur du filtre (24) de combinaison et en pénétrant dans la direction radiale dans le filtre (24) de combinaison traversé dans la direction radiale.

13. Procédé de fabrication d'une cartouche (10) d'agent déshydratant pour un déshydrateur (12) d'air d'une installation (14) de préparation d'air comprimé d'un véhicule (16) comprenant
- un boîtier (18) ayant une entrée (20) d' air et une sortie (22) d'air,
- un filtre (24) de combinaison, composé d'au moins une couche filtrante pour la séparation de particules d'huile et de saleté,
- une boîte (26) d'agent déshydratant ayant de l'agent (28) déshydratant pour déshydrater l'air, et
- un clapet anti-retour (42, 44) par lequel, pendant une phase de régénération, au moins une partie du courant d'air utilisé pour la régénération peut passer à côté du filtre (24) de combinaison,
- dans lequel le filtre (24) de combinaison est fixé directement sur un élément (65, 66) de support, et
- dans lequel le filtre (24) de combinaison est immobilisé dans la direction axiale sur l'élément (65 , 66) de support,
**caractérisé**
- **en ce que** des contours (40) de perturbation sont montés en étant tournés dans la direction axiale vers l'élément (65, 66) de support et vers le dispositif (36) de maintien, en entourant l'élément (65, 66) de support, en conduisant de l'air à l'intérieur du filtre (24) de combinaison et en pénétrant dans la direction axiale dans le filtre (24) de combinaison traversé dans la direction axiale.

14. Procédé suivant la revendication 12, **caractérisé**
- **en ce que** le filtre (24) de combinaison est enroulé dans la direction azimutale sur l'élément (65, 66) de support.

15. Procédé suivant la revendication 13, **caractérisé**
- **en ce que** le filtre (24) de combinaison est formé d'au moins une couche (38) filtrante en forme de disque circulaire, qui entoure l'élément (65, 66) de support.
